# FASCICULE DE BREVET EUROPEEN

(11) **EP 1 210 237 B1**
(45) Date de publication et mention de la délivrance du brevet: **21.01.2004**
(21) Numéro de dépôt: 00956624.1
(22) Date de dépôt: 04.08.2000
(51) Int. Cl.: B60J 7/047

(54) **SYSTEME DE TOIT RETRACTABLE ET VEHICULE EQUIPE DE CE SYSTEME**
VERSENKBARES DACHSYSTEM UND DAMIT AUSGERÜSTETES FAHRZEUG
FOLDING ROOF SYSTEM AND VEHICLE EQUIPPED THEREWITH

(30) Priorité: 10.09.1999 FR 9911377
(43) Date de publication de la demande: 05.06.2002
(73) Titulaire: Société Européenne de Brevets Automobiles, 75011 Paris (FR)
(72) Inventeur: GUILLEZ, Jean-Marc, F-79140 Cerizay (FR); QUEVEAU, Paul, Fernand, Philippe, F-79140 Montravers (FR); QUEVEAU, Gérard, Armand, Jules, F-79140 Le Pin (FR)
(74) Mandataire: Geismar, Thierry
(86) Numéro de dépôt international: PCT/FR2000/002251
(87) Numéro de publication internationale: WO 2001/019633

(56) Documents cités:
- EP-A- 0 101 322
- EP-A- 0 447 781
- DE-A- 3 635 888
- DE-A- 3 942 746
- GB-A- 530 784

## Description

La présente invention concerne un système de toit rétractable pour structure fixe ou mobile notamment pour véhicule, par exemple un véhicule ou un bateau.

On connaît, d'après le FR-B-2 694 245 au nom de la Demanderesse, un système de toit rétractable pour véhicule constitué d'au moins deux panneaux rigides, respectivement un premier panneau avant et un second panneau central, solidarisés l'un à l'autre par des moyens coulissants agencés de manière telle que le panneau avant est mobile entre une position fermée, dans laquelle il recouvre l'habitacle, et une position ouverte dans laquelle il est, après coulissement vers l'arrière, superposé au panneau central, le panneau central étant monté de manière pivotante sur des bras latéraux fixés chacun à une extrémité au panneau central et à l'autre extrémité à un point d'articulation fixé au châssis du véhicule, le panneau central étant adapté à pivoter, en entraînant le panneau avant qui lui est superposé, entre une position fermée dans laquelle il recouvre l'habitacle, et une position ouverte dans laquelle le panneau avant et le panneau central sont logés, dans leur position superposée, sensiblement à la verticale derrière l'habitacle du véhicule, les moyens coulissants comprenant une glissière avant solidaire du panneau avant, une glissière arrière solidaire du panneau central, et une glissière intermédiaire reliée de manière coulissante par l'intermédiaire de galets et de gorges à la fois à la glissière avant et à la glissière arrière.

Le document GB-A-530 784 concerne un véhicule automobile comprenant un toit escamotable comprenant trois panneaux, avant, intermédiaire et arrière. Il est prévu d'engager le panneau avant dans le panneau intermédiaire, ce qui rend la réalisation complexe.

La présente invention a pour but de remédier aux inconvénients des systèmes précités et de proposer des perfectionnements du système décrit dans FR-B-2-694 245 autorisant une réalisation simple et fiable pouvant être adaptée à différents types de carrosseries de véhicules ou à différents types de structure fixe ou mobile.

Suivant la présente invention, le système de toit rétractable du type précité est caractérisé en ce qu'il comporte deux glissières parallèles de forme arquées fixées à la carrosserie du véhicule et s'étendant chacune entre un point proche de l'avant du panneau central et un point proche du fond du coffre arrière du véhicule et de la partie arrière de l'habitacle, le panneau central comportant des organes coopérant avec les deux glissières pour guider son déplacement le long de celles-ci.

Un tel système de toit rétractable est de réalisation simple et permet un guidage précis du déplacement des deux panneaux superposés entre la position de fermeture et la position d'ouverture dans laquelle ils sont rangés dans le coffre et occupent un volume réduit de celui-ci.
Selon une version préférée de l'invention, la forme arquée des glissières présente une convexité dirigée vers l'intérieur du coffre.

Cette forme s'adapte à la géométrie du véhicule.

De préférence, les organes coopérant avec les deux glissières , comprennent deux galets fixés près de chacun des bords latéraux du panneau central, respectivement près de l'avant et près de l'arrière de ce dernier.

Selon une version avantageuse de l'invention, les galets sont conformés en pignons engrenés dans une crémaillère solidaire de chaque glissière et suivant le profil de celle-ci.

Dans cette version, l'une des paires de galets est entraînée en rotation par un moteur électrique relié à chaque galet par un demi-arbre de transmission.

D'autres particularités et avantages de la présente invention apparaîtront dans la description détaillée ci-après :

Aux dessins annexés, donnés uniquement à titre d'exemples non limitatifs :
- la figure 1 est une vue schématique d'un véhicule équipé d'un système de toit rétractable selon l'invention,
- la figure 2 est une vue en coupe longitudinale partielle d'un-véhicule équipé du système de toit rétractable selon l'invention,
- la figure 3 est une vue en perspective du système de toit rétractable,
- la figure 4 est une demi-coupe transversale de la partie arrière du véhicule,
- la figure 5 est une demi-coupe suivant le plan IV-IV de la figure 2,
- la figure 6 est une vue à échelle agrandie du détail A₁ de la figure 5.

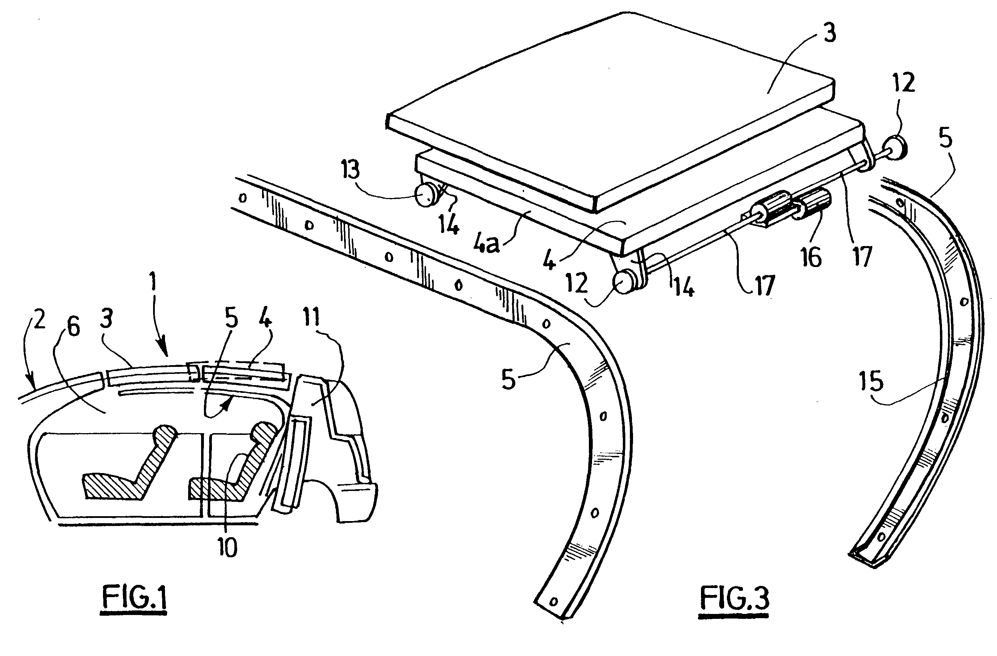

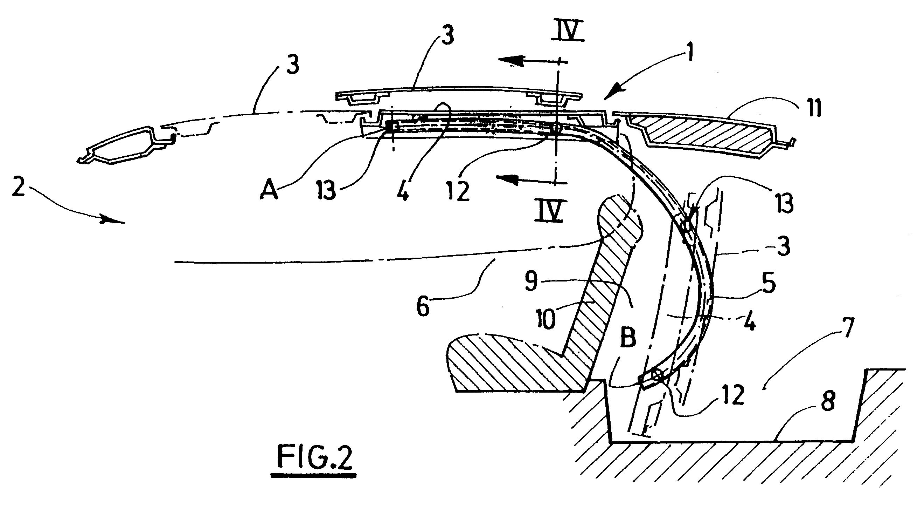

Dans la réalisation représentée sur les figures 1, 2, 3, le système de toit rétractable pour le véhicule (2) est constitué de deux panneaux rigides, respectivement un premier panneau avant (3) et un second panneau central (4), solidarisés l'un à l'autre par des moyens coulissants agencés de manière telle que le panneau avant (3) est mobile entre une position fermée (voir figure 1), dans laquelle il recouvre l'habitacle, et une position ouverte (voir figure 2) dans laquelle il est, après coulissement vers l'arrière, superposé au panneau central (4).

Le panneau central (4) est déplaçable en entraînant le panneau avant (3) qui lui est superposé, entre une position fermée, dans laquelle il recouvre l'habitacle, et une position ouverte dans laquelle le panneau avant (3) et le panneau central (4) sont logés, dans leur position superposée, sensiblement à la verticale derrière l'habitacle (6) du véhicule, comme montré en pointillés sur la figure 2.

Le système qui permet de guider le déplacement du panneau (3) vers la position représentée en traits pleins sur la figure 2, dans laquelle le panneau (3) est situé sur le panneau (4) ne sera pas décrit en détail ici; en effet, il a été décrit dans le brevet français FR-B-2694245 et dans la demande de brevet français No. 9 910 204 du 5 août 1999 au nom de la Demanderesse.

Conformément à l'invention, le système de toit rétractable comporte deux glissières (5) parallèles de forme arquées fixées à la carrosserie du véhicule (2).

Ces glissières (5) s'étendent chacune entre un point A proche de l'avant du panneau central (4) et un point B proche du fond (8) du coffre arrière (7) du véhicule et de la partie arrière (9) de l'habitacle (6).

Le panneau central (4) comporte des organes qui seront détaillés plus loin coopérant avec les deux glissières (5) pour guider son déplacement le long de celles-ci.

Comme on le voit notamment sur la figure 2, la forme arquée des glissières (5) présente une convexité dirigée vers l'intérieur du coffre (7).

Cette forme arquée permet de guider le déplacement des panneaux (3, 4) par un passage compris entre le siège arrière (10) et la partie arrière fixe (11) du toit.

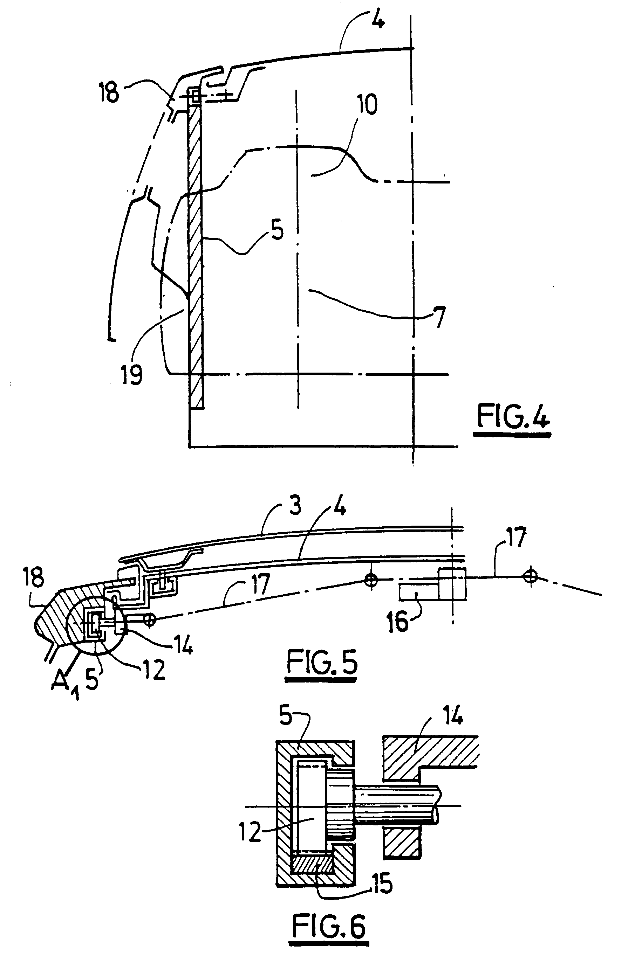

Les organes du panneau (4) coopérant avec les deux glissières (5), comprennent deux galets (12, 13) fixés à des pattes (14) situées près de chacun des bords latéraux (4a) du panneau central, respectivement près de l'avant et près de l'arrière de ce dernier, comme indiqué sur les figures 2 et 3.

Le système de toit rétractable selon l'invention, comporte en outre des moyens pour entraîner le déplacement du panneau central (4) le long des deux glissières (5).

Ces moyens peuvent comprendre des câbles entraînés par un moteur ou un vérin.

De Préférence, les galets (12, 13) sont conformés en pignons (voir figures 3, 5 et 6) engrenés dans une crémaillère (15) solidaire de chaque glissière (5) et suivant le profil de celle-ci.

Comme on le voit sur les figures 3 et 5, la paire de galets (12), située près de l'arrière du panneau (4), est entraînée en rotation par un moteur électrique (16) relié à chaque galet par un demi-arbre de transmission (17).

La figure 4 montre, d'autre part, que chaque glissière (5) est fixée à sa partie supérieure à l'une des deux parties latérales (18) du toit fixe, situées de part et d'autre de l'ouverture du toit.

Par ailleurs, chaque glissière (5) est fixée à sa partie inférieure à l'une des deux parties latérales (19) de la carrosserie située à l'intérieur du coffre (7).

Le système de toit rétractable que l'on vient de décrire fonctionne de la façon suivante :

Dans une première étape, un mécanisme approprié, commande le coulissement du panneau avant (3) vers l'arrière, jusqu'à ce que ce panneau se superpose au panneau central (4), comme indiqué sur la figure 2.

Dans cette position, les deux panneaux sont verrouillés l'un à l'autre.

On commande ensuite la mise en route du moteur électrique (16).

Celui-ci entraîne en rotation les demi-arbres (17) et les galets (12) en forme de pignon.

La rotation des galets (12) sur les crémaillères (15) des glissières (5) déplace les panneaux (3, 4) vers le coffre, jusqu'à ce que les galets arrivent en fin de course, à proximité du point B.

Dans cette position, les deux panneaux (3, 4) occupent une position presque verticale, grâce à la courbure des glissières (5).

En commandant la rotation du moteur électrique en sens inverse, les panneaux (3, 4) se déplacent du coffre vers la position de fermeture du toit.

## Revendications

1. Système de toit rétractable (1) pour véhicule (2), ce toit (1) étant constitué de deux panneaux rigides, respectivement un premier panneau avant (3) et un second panneau central (4), solidarisés l'un à l'autre par des moyens coulissants agencés de manière telle que le panneau avant (3) est mobile entre une position fermée, dans laquelle il recouvre l'habitacle (6), et une position ouverte dans laquelle il est, après coulissement vers l'arrière, superposé au panneau central (4), ce dernier étant déplaçable, en entraînant le panneau avant qui lui est superposé, entre une position fermée, dans laquelle il recouvre l'habitacle (6), et une position ouverte dans laquelle le panneau avant (3) et la panneau central (4) sont logés, dans leur position superposée, sensiblement à la verticale derrière l'habitacle (6) du véhicule (2), **caractérisé en ce qu'**il comporte deux glissières (5) parallèles de forme arquées fixées à la carrosserie du véhicule et s'étendant chacune entre un point (A) proche de l'avant du panneau central (4) et un point (B) proche du fond (8) du coffre arrière (7) du véhicule et de la partie arrière (9) de l'habitacle (8), le panneau central (4) comportant des organes (12, 13) coopérant avec les deux glissières (5) pour guider son déplacement le long de celles-ci.

2. Système de toit rétractable selon la revendication 1, **caractérisé en ce que** la forme arquée des glissières (5) présente une convexité dirigée vers l'intérieur du coffre (7).

3. Système de toit rétractable selon l'une des revendications 1 et 2, **caractérisé en ce que** les organes coopérant avec les deux glissières (5), comprennent deux galets (12 et 13) fixés près de chacun des bords latéraux (4a) du panneau central (4), respectivement près de l'avant et près de l'arrière de ce dernier.

4. Système de toit rétractable selon l'une des revendications 1 à 3, **caractérisé en ce qu'**il comporte des moyens (16, 17) pour entraîner le déplacement du panneau central (4) le long des deux glissières (5).

5. Système de toit rétractable conforme à l'une des revendications 3 ou 4, **caractérisé en ce que** les galets (12 et 13) sont conformés en pignons engrénés dans une crémaillère (15) solidaire de chaque glissière (5) et suivant le profil de celle-ci.

6. Système de toit rétractable conforme à la revendication 5, **caractérisé en ce que** l'une des paires de galets (12) est entraînée en rotation par un moteur électrique (16) relié à chaque galet (12) par un demi-arbre de transmission (17).

7. Système de toit rétractable conforme à l'une des revendication 1 à 6, **caractérisé en ce que** chaque glissière (5) est fixée à sa partie supérieure à l'une des deux parties latérales (18) du toit fixe, situées de part et d'autre de l'ouverture du toit.

8. Système de toit rétractable conforme à l'une des revendications 1 à 7, **caractérisé en ce que** chaque glissière (5) est fixée à sa partie inférieure à l'une des deux parties latérales (19) de la carrosserie située à l'intérieur du coffre (7).

9. Véhicule, notamment automobile équipé du système de toit rétractable selon l'une des revendications 1 à 8.

## Claims

1. A sunroof system (1) for a vehicle (2), this roof (1) consisting of two rigid panels, respectively a first front panel (3) and a second central panel (4), fixed to each other by sliding means arranged in such a way that the front panel (3) is able to move between a closed position in which it covers the cabin (6) and an open position in which it is, after sliding towards the rear, superimposed on the central panel (4), the latter being able to move, whilst driving the front panel which is superimposed on it, between a closed position in which it covers the cabin (6) and an open position in which the front panel (3) and the central panel (4) are housed, in their superimposed position, substantially vertically behind the cabin (6) of the vehicle (2), **characterised in that** it has two parallel arched runners (5) fixed to the vehicle bodywork and each extending between a point (A) close to the front of the central panel (4) and a point (B) close to the bottom (8) of the rear boot (7) of the vehicle and the rear part (9) of the cabin (8), the central panel (4) having members (12, 13) cooperating with the two runners (5) in order to guide its movement along these.

2. A sunroof system according to Claim 1, **characterised in that** the arched shape of the runners (5) has a convexity directed towards the inside of the boot (7).

3. A sunroof system according to one of Claims 1 and 2, **characterised in that** the members cooperating with the two runners (5) comprise two rollers (12 and 13) fixed close to each of these side edges (4a) of the central panel (4), respectively close to the front and close to the rear of the latter.

4. A sunroof system according to one of Claims 1 to 3, **characterised in that** it has means (16, 17) for driving the movement of the central panel (4) along the two runners (5).

5. A sunroof system according to one of Claims 3 or 4, **characterised in that** the rollers (12 and 13) are shaped like pinions meshed in a rack (15) fixed to each runner (5) and following the profile of the latter.

6. A sunroof system according to Claim 5, **characterised in that** one of the pairs of rollers (12) is rotated by an electric motor (16) connected to each roller (12) by a transmission half-shaft (17).

7. A sunroof system according to one of Claims 1 to 6, **characterised in that** each runner (5) is fixed at its top part to one of the two side parts (18) of the fixed roof, situated on each side of the roof opening.

8. A sunroof system according to one of Claims 1 to 7, **characterised in that** each runner (5) is fixed at its bottom part to one of the two side parts (19) of the bodywork situated inside the boot (7).

9. A vehicle, notably a motor car equipped with the sunroof system according to one of Claims 1 to 8.

## Patentansprüche

1. Klappdachsystem (1) für ein Fahrzeug (2), wobei dieses Dach (1) aus zwei festen Platten, jeweils einer ersten vorderen Platte (3) und einer zweiten zentralen Platte (4) gebildet wird, die einander durch derart angeordnete Gleitmittel fest verbunden sind, dass die vordere Platte (3) zwischen einer geschlossenen Position, in der sie die Insassenkabine (6) abdeckt, und einer offenen Position, in der sie nach dem Gleiten nach hinten über die zentrale Platte (4) überlagert wird, mobil ist, wobei letztere durch Antreiben der vorderen, ihr überlagerten Platte zwischen einer geschlossenen Position, in der sie die Insassenkabine (5) abdeckt, und einer offenen Position, in der die vordere Platte (3) und die zentrale Platte (4) in ihrer überlagerten Position untergebracht sind, deutlich zur Vertikalen hinter der Insassenkabine (6) des Fahrzeugs (2) verschiebbar ist, **dadurch gekennzeichnet, dass** es zwei parallele, bogenförmige, an der Karosserie des Fahrzeugs befestigte Gleitschienen (5) umfasst, von denen sich jede zwischen einem Punkt (A) in der Nähe des vorderen Teils der zentralen Platte (4) und einem Punkt (B) in der Nähe des Bodens (8) des hinteren Gepäckraums (7) des Fahrzeugs und dem hinteren Teil (9) der Insassenkabine (6) erstreckt, wobei die zentrale Platte (4) mit den beiden Gleitschienen (5) zusammenwirkende Organe (12, 13) umfasst, um ihre Verschiebung entlang derselben zu führen.

2. Klappdachsystem gemäß Anspruch 1, **dadurch gekennzeichnet, dass** die bogenförmige Form der Gleitscheinen (5) eine zur Innenseite des Gepäckraums (7) gerichtete Wölbung aufweist.

3. Klappdachsystem gemäß Anspruch 1 und 2, **dadurch gekennzeichnet, dass** die mit den beiden Gleitschienen (5) zusammenwirkenden Organe zwei in der Nähe jedes der Seitenränder (4a) der zentralen Platte (4) jeweils in der Nähe der Vorder- und in der Nähe der Rückseite derselben befestigte Rollen (12 und 13) umfassen.

4. Klappdachsystem gemäß Anspruch 1 bis 3, **dadurch gekennzeichnet, dass** es Mittel (16, 17) zum Antreiben der Verschiebung der zentralen Platte (4) entlang den beiden Gleitschienen (5) umfasst.

5. Klappdachsystem gemäß Anspruch 3 oder 4, **dadurch gekennzeichnet, dass** die Rollen (12 und 13) als in eine fest mit jeder Gleitschiene (5) verbundene Zahnstange (15) gemäß dem Profil derselben eingegriffene kleine Zahnräder angepasst sind.

6. Klappdachsystem gemäß Anspruch 5, **dadurch gekennzeichnet, dass** eines der Rollenpaare (12) in Rotation durch einen mit jeder Rolle (12) durch eine halbe Übertragungswelle (17) verbundenen Elektromotor (16) angetrieben wird.

7. Klappdachsystem gemäß Anspruch 1 bis 6, **dadurch gekennzeichnet, dass** jede Gleitschiene (5) an ihrem oberen Ende an einem der beiden Seitenteile (18) des festen Dachs befestigt ist, die sich an jeder Seite der Öffnung des Dachs befinden.

8. Klappdachsystem gemäß Anspruch 1 bis 7, **dadurch gekennzeichnet, dass** jede Gleitschiene (5) an ihrem unteren Ende an einem der beiden sich im Innern des Gepäckraums (7) befindenden Seitenteile (19) der Karosserie befestigt ist.

9. Fahrzeug, insbesondere mit dem Klappdachsystem gemäß Anspruch 1 bis 8 ausgerüstetes Automobil.
